# EUROPÄISCHE PATENTSCHRIFT

(11) **EP 0 808 428 B1**
(45) Veröffentlichungstag und Bekanntmachung des Hinweises auf die Patenterteilung: **22.07.1998**
(21) Anmeldenummer: 96900512.3
(22) Anmeldetag: 16.01.1996
(51) Int. Cl.: F16D 1/09

(54) **SPANNSATZ**
CLAMPING SYSTEM
SYSTEME DE SERRAGE

(30) Priorität: 08.02.1995 DE 29501992 U
(43) Veröffentlichungstag der Anmeldung: 26.11.1997
(73) Patentinhaber: Müllenberg, Ralph, D-41516 Grevenbroich (DE)
(72) Erfinder: Müllenberg, Ralph, D-41516 Grevenbroich (DE)
(74) Vertreter: Palgen, Peter, Dipl.-Phys. Dr.
(86) Internationale Anmeldenummer: DE9600041
(87) Internationale Veröffentlichungsnummer: WO9624779

(56) Entgegenhaltungen:
- DE-A- 3 145 521
- DE-B- 1 046 416
- DE-B- 1 183 317
- DE-B- 2 734 784
- DE-U- 9 208 196
- GB-A- 2 026 650

## Beschreibung

Die Erfindung bezieht sich auf einen Spannsatz der dem Oberbegriff des Anspruchs 1 entsprechenden Art.

Ein solcher Spannsatz ist durch die DE 27 34 784 C2 bekannt. Der bekannte Spannsatz hat sich zur Erzeugung hoher radialer Spannkräfte bei selbsttätiger Lösung nach Lockern der Spannschrauben bewährt. Allerdings wurde in einigen Fällen bei niedrigen Reibungsbeiwerten an den Konusflächen beobachtet, daß sich der mittlere Konusring, der bei hohen Anzugskräften unter Umständen schon eine plastische Verformung erfährt, zwischen den benachbarten Konuselementen in Achsrichtung in Richtung auf die Scheitel der Konusflächen herausdrückte.

Der Erfindung liegt die Aufgabe zugrunde, diese Erscheinung zu verhindern.

Diese Aufgabe wird durch die in Anspruch 1 wiedergegebene Erfindung gelöst.

Die berandete Ausnehmung soll also nicht etwa ein in einer durch die Achse gehenden Ebene durchgehender Schlitz sein, wie er bei Konusspannanordnungen zur Erleichterung der Verformung von Konusringen häufig anzutreffen ist. Vielmehr soll die Ausnehmung mindestens eine, normalerweise jedoch zwei sich in Umfangsrichtung erstreckende Wandungen bzw. sich im wesentlichen in Umfangsrichtung erstreckende gewölbte Wandungsteile aufweisen. Dies hat die Wirkung, daß die der Ausnehmung benachbarte Konusfläche, die keine Ausnehmung aufweist, sich unter den sehr hohen radialen Drücken ein wenig in die Ausnehmung hineindrückt, so daß an den im wesentlichen in Umfangsrichtung verlaufenden Kanten der Ausnehmung ein erhöhter Reibungswiderstand auftritt, der eine Verlagerung des mittleren Konusrings in Achsrichtung gegenüber dem die benachbarte Konusfläche aufweisenden Konuselement unterbindet.

Es hat sich gezeigt, daß mit der erfindungsgemäßen Maßnahme auch bei einen niedrigen Reibungskoeffizienten aufweisenden Konusflächen-Paarungen ein Herausquetschen des mittleren Konusrings zwischen den beiden benachbarten Konuselementen sicher verhindert werden kann.

Um eindeutige Kräfteverhältnisse zu schaffen, ist die Ausgestaltung nach Anspruch 2 zweckmäßig. Der mittlere Konusring legt sich beim Anziehen zunächst gegen den Anschlag an dem Konuselement mit dem größeren Konuswinkel. Dieses Konuselement und der mittlere Konusring wirken von da an wie eine Einheit, gegenüber welcher sich das den kleineren Konuswinkel aufweisende Konuselement allein in Achsrichtung weiter bewegt.

Bei der bevorzugten Ausführungsform ist die Ausnehmung in mindestens einer der Konusflächen des mittleren Konusrings vorgesehen (Anspruch 3).

Sie kann insbesondere durch eine ringsum berandete radial durchgehende Durchbrechung des mittleren Konusrings gebildet sein (Anspruch 4), die fertigungsmäßig einfach ist und durch eine radiale Bohrung (Anspruch 5) oder eine eingefräste Nut (Anspruch 6) gebildet sein kann.

Ein wesentlicher Effekt wird schon erreicht, wenn nur eine Ausnehmung an dem mittleren Konusring vorhanden ist.

Insbesondere aus Gründen der gleichmäßigen Verteilung von Kräften und Verformungen kann es sich aber empfehlen, mehrere Ausnehmungen über den Umfang gleichmäßig verteilt vorzusehen.

In der Zeichnung sind zwei Ausführungsbeispiele der Erfindung dargestellt.
Fig. 1 und 2 zeigen durch die Achse von Spannsätzen gehende Schnitte;
Fig. 3 zeigt eine vergrößerte Wiedergabe des in Fig. 2 strichpunktiert wiedergegebenen Bereichs III.

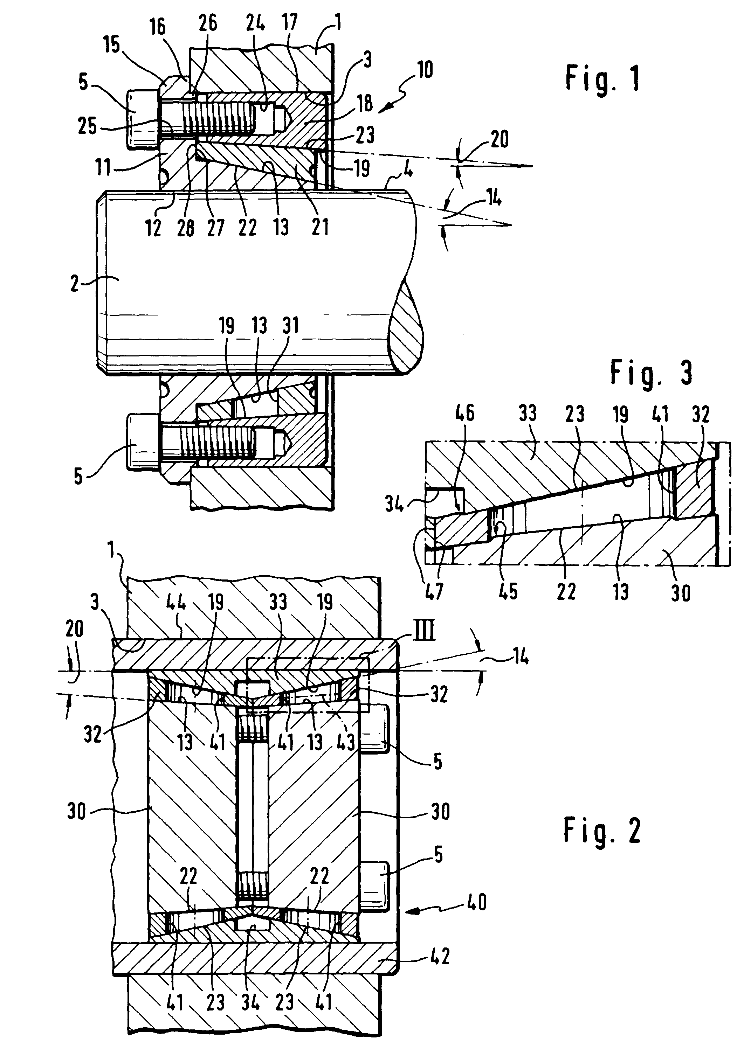

In den beiden Beispielen ist das äußere Bauteil mit 1 bezeichnet. Es kann sich um die Nabe eines Zahnrades oder sonstigen Rades, auch um die Wandung einer Antriebstrommel für Förderbänder oder dergleichen handeln. Das äußere Bauteil 1 wird auf einer Welle 2 bzw 42 mittels der verschiedenen Ausführungsformen der Spannsätze festgelegt. Das äußere Bauteil besitzt eine zylindrische Ausnehmung 3, die Welle 2 eine zylindrische Umfangsfläche 4bzw 44. Bei der Ausführungsform nach Fig. 1 besteht dazwischen ein Abstandsraum, in welchem ein Spannsatz 10 untergebracht ist. In Fig. 2 ist die Welle 42 eine Hohlwelle, in der der Spannsatz 40 angeordnet ist und die mit ihrem Außenumfang 44 in der zylindrischen Ausnehmung 3 des äußeren Bauteils 1 anliegt.

Der als Ganzes mit 10 bezeichnete Spannsatz der Fig. 1 umfaßt ein inneres Konuselement in Gestalt eines inneren Konusrings 11, der mit seiner zylindrischen Innenumfangsfläche 12 auf der Außenumfangsfläche 4 der Welle 2 anliegt. Außenseitig besitzt der Konusring 11 eine Konusfläche 13 mit einem Konuswinkel 14 von etwa 12°, d.h. über dem Selbsthemmungswinkel von etwa 7°. Am dickwandigen Ende besitzt der Konusring 11 einen Radialflansch 15, der radial so weit auslädt, daß er die Kante des äußeren Bauteils 11 bei 16 übergreift.

An der zylindrischen Ausnehmung 3 des äußeren Bauteils 1 liegt mit der zylindrischen Außenumfangsfläche 17 ein äußeres Konuselement in Gestalt eines äußeren Konusrings 18 an, dessen innere Umfangsfläche 19 eine Konusfläche mit einem im Selbsthemmungsbereich liegenden Konuswinkel 20 von etwa 3° ist.

Zwischen den Konusringen 11 und 18 befindet sich ein mittlerer Konusring 21, der auf beiden Umfangsseiten Konusflächen 22 bzw. 23 trägt, die den Konusflächen 13 bzw. 19 entsprechen, d.h. den gleichen Konuswinkel haben und flächig an ihnen anliegen. Die Konusflächen 13,22 bzw. 19,23 sind so angeordnet, daß sich die Scheitel der Konusflächen auf der gleichen, nämlich in Fig. 1 rechten Seite des Konusrings 10 befinden.

Der Konusring 18 weist auf der dem Radialflansch 15 zugewandten Seite eine Gewindebohrung 24 auf, in die von der Außenseite des Radialflansches 15 her eine diesen in einer Bohrung 25 durchgreifende Kopfschraube 5 einschraubbar ist. Es sind mehrere Kopfschrauben 5 über den Umfang gleichmäßig verteilt. Meist sind die Kopfschrauben so dicht beieinander angeordnet wie es nur geht.

Solange die Schrauben 5 locker sind, bildet der Spannsatz 10 eine Einheit, deren Teile unverlierbar zusammenhängen. Nach dem Einsetzen in den Abstandsraum zwischen der Welle 2 und dem äußeren Bauteil 1 beginnt das Verspannen durch Anziehen der Spannschrauben 5. Zur Erzielung einer Zentrierung kann es zweckmäßig sein, wenn der Radialflansch 15 einen zylindrischen Ansatz 26 aufweist, der gerade in die zylindrische Ausnehmung 3 hineinpaßt. Auf diese Weise wird ein "Absacken" des äußeren Bauteils 1 auf der Welle 2 vermieden, was ein gleichmäßiges, konzentrisches Verspannen behindert.

Beim Anziehen der Spannschrauben 5 bewegt sich der Konusring 18 axial gegen den Radialflansch 15 und nimmt dabei den mittleren Konusring 21 mit. Der Radialflansch 15 bildet mit seiner gegen die Konusringe 18,21 gerichteten, senkrecht zur Achse gelegenen Fläche einen Anschlag 27, gegen den nach einiger Verlagerung des mittleren Konusrings 21 in Achsrichtung dessen Stirnseite 28 zur Anlage kommt. Die Bemessung der Radien der Konusflächen 13,22 ist so getroffen, daß dann diese Konusflächen ebenfalls aufeinander anliegen. Von diesem Verspannungspunkt an bilden die Konusringe 11 und 21 eine Einheit, deren Teile gegeneinander bei weiterem Anziehen der Spannschrauben 5 unverrückbar sind.

Da die Spannschrauben 5 zwischen den Konusringen 11 und 18 wirken, erfolgt die weitere Verspannung so, als handelte es sich lediglich um einen zweiteiligen Spannsatz mit einem im Selbsthemmungsbereich liegenden Konuswinkel 20. Der Konusring 18 kann also bis zur Erzielung einer erheblichen radialen Anpreßkraft auf den mittleren Konusring 21 aufgezogen werden.

Zum Lösen des Spannsatzes 10 werden die Spannschrauben 5 gelöst. Wegen des über dem Selbsthemmungsbereich liegenden Konuswinkels 14 lockern sich die Konusringe 21 und 18 als Einheit, ohne daß es hierzu bei entsprechender Dimensionierung Abdrückschrauben bedarf.

Damit die Konusringe 11,18,21 nicht in sich Spannkraft der Spannschrauben 5 aufzehren, empfiehlt es sich, alle Konusringe in einer durch die Achse gehenden Ebene durchgehend zu schlitzen.

Wenn die Spannschrauben 5 sehr stark angezogen werden und die Konusflächen 13,22 bzw. 19,23 mit einem hochwirksamen Schmiermittel versehen sind, kann es vorkommen, daß der mittlere Konusring 21 zwischen den äußern Konusringen 11 und 18 gemäß Fig. 1 nach rechts, d.h. in Richtung der Scheitel der Konusflächen 13,22 und 19,23 zwischen den Konusringen 11,18 herausgedrückt wird.

Um dies zu verhindern, weist der mittlere Konusring 21 eine radial durchgehende, jedoch in der Umfangsfläche ringsum berandete Nut 31 auf, deren längere Erstreckung in Umfangsrichtung oder auch parallel zur Achsrichtung verlaufen kann. Unter den erheblichen radialen Kräften drükken sich die der Nut 31 benachbarten Konusflächen 13 und 19 etwas in den lichten Querschnitt der Nut 31 hinein.

Überraschenderweise wurde gefunden, daß sich auf diese einfache Weise der mittlere Konusring 21 in Achsrichtung blockieren läßt, so daß das unerwünschte Herausrutschen gemäß Fig. 1 nach rechts unterbleibt.

Soweit in Fig. 2 funktionell der Fig. 1 entsprechende Teile vorhanden sind, sind die Bezugszahlen gleich.

Während der Spannsatz 10 in dem radialen Zwischenraum zwischen Außenumfang der Welle 2 und Innenumfang des äußeren Bauteils 1 angeordnet ist, ist die Welle 42 in Fig. 2 eine Hohlwelle, die die mit ihrem zylindrischen Außenumfang 44 in der zylindrischen Ausnehmung 3 des äußeren Bauteils 1 anliegt. Es gibt also keinen Zwischenraum zwischen Welle 42 und äußeren Bauteil 1. Der Spannsatz 40 ist vielmehr im Innern der Hohlwelle 42 angeordnet und weitet diese radial auf, um den Reibungsschluß zwischen dem Außenumfang 44 der Hohlwelle 42 und dem äußeren Bauteil 1 herzustellen.

Der Spannsatz 40 ist als Doppelkonsspannsatz ausgebildet und besitzt zwei einander entgegengesetzt angeordnete innere Konuselemente in Gestalt von am äußeren Umfang die Konusfläche 13 mit dem unter dem Selbsthemmungsbereich liegenden Winkel aufweisenden Konusscheiben 30, die durch die Spannschrauben 5 in Achsrichtung gegeneinander gezogen werden. Die Konusflächen 13 sind mit den kleineren Radien einander zugewandt. Auf den Konusscheiben 30 sind zwei doppelkonische Ringe 32 angeordnet, die dem Konusring 21 in Fig. 1 entsprechen. Das äußere Konuselement ist ein Doppelkonusring mit über dem Selbsthemmungsbereich liegendem Konuswinkel 14, welcher zwei Konusflächen 19 aufweist, die so angeordnet sind, daß die größte Wandstärke des Doppelkonusrings 33 in der Mitte liegt.

Die Konusringe 32 weisen ringsum geschlossene, radial durchgehende Bohrungen 41 mit durch die Achse der Konuselemente gehende, zu dieser senkrechter Bohrungsachse auf, von denen zwei um 180° versetzt einander gegenüberliegen. Die Bohrungen 41 haben die gleiche blockierende Wirkung wie die Bohrungen 31 in Fig. 1.

Die Nuten 31 bzw. Bohrungen 41 müssen nicht unbedingt durch die gesamte Wandstärke der mittleren Konusringe 21 bzw. 32 hindurchgehen. Für die Erzielung der beabsichtigten Wirkung würde es theoretisch auch ausreichen, wenn nur flache Ausnehmungen vorgesehen wären, wie es durch die strichpunktierte Linie in Fig. 2 bei 43 angedeutet ist. Es versteht sich aber, daß die Anbringung einer durchgehenden Bohrung 41 erheblich einfacher ist als die Herausarbeitung einer flachen Vertiefung 43, insbesondere auf der Innenseite der Konusringe 32.

Die Wirkung der Erfindung ist schematisch in Fig. 3 angedeutet, die den in Fig. 2 rechts oben angedeuteten Bereich III vergrößert wiedergibt. Es ist zu erkennen, daß sich die Konusfläche 13 unter dem herrschenden hohen Druck etwas in den lichten Querschnitt der radialen Bohrung 41 hineindrückt. Die Darstellung in Fig. 3 ist der Deutlichkeit halber übertrieben. An der Stelle 45 an der die Bohrungswandung etwa in Umfangsrichtung verläuft, ergibt sich durch die gebildete Erhöhung der Konusfläche 13 eine Blockierung, die das Herausrutschen des Konusrings 32 nach rechts verhindert.

Der Doppelkonusring 33 besitzt an seiner Innenumfangsfläche 19,19 in der Mitte eine den Querschnitt verringernde Umfangsnut 34, die an der in ihrer Wirkung der Stelle 45 entsprechenden Stelle 46 zu einem zusätzlichen Blockierungseffekt bei verspanntem Spannsatz 40 führt.

Die im Bereich der Nut 34 gelegenen kleineren Stirnseiten 47 der mittleren Konusringe 32 liegen axial gegeneinander an und bilden gegenseitige Anschläge entsprechend dem Anschlag 27 in Fig. 1.

## Patentansprüche

1. Spannsatz (10,40) zum Verbinden eines eine zylindrische Ausnehmung (3) aufweisenden äußeren Bauteils (1), insbesondere einer Nabe, mit einem konzentrisch zu der Ausnehmung (3) angeordneten, eine zylindrische Außenumfangsfläche (4,44) aufweisenden inneren Bauteil (2,42), insbesondere einer Welle,
mit einem inneren Konuselement (11,30) mit einer als Konusfläche (13) ausgebildeten äußeren Umfangsfläche,
mit einem äußeren Konuselement (18,33) mit einer als Konusfläche (19) ausgebildeten inneren Umfangsfläche,
mit einem mittleren Konusring (21,32) mit als Konusflächen (22,23) ausgebildeten inneren und äußeren Umfangsflächen, die mit den äußeren und inneren Konusflächen (13,19) der Konuselemente (11,30;18,33) gleiche Konuswinkel (14,20) aufweisen und axial abgleitend zusammenwirken und mit diesen je ein Konusflächenpaar (13,22;19,23) bilden, wobei die Scheitel der Konusflächen (22,23) des mittleren Konusrings (21,32) axial auf derselben Seite des Konusrings (21,32) gelegen sind und der Konuswinkel (20) des einen Konusflächenpaars (19,23) mit einem Winkelabstand vom Selbsthemmungswinkel im Selbsthemmungsbereich, der Konuswinkel (14) des anderen Konusflächenpaars (13,22) über dem Selbsthemmungsbereich liegt,
und mit axialen Spannschrauben (5), die den mittleren Konusring (21) gegenüber dem inneren und äußeren Konuselement (11,18) axial gegeneinander verspannen,
**dadurch gekennzeichnet**,
daß in mindestens einer der Konusflächen der beiden Konusflächenpaare (13,22;19,23) mindestens eine ringsum berandete Ausnehmung (31,41) vorgesehen ist.

2. Spannsatz nach Anspruch 1, **dadurch gekennzeichnet**, daß an dem den über dem Selbsthemmungsbereich liegenden Konuswinkel (14) aufweisenden Konuselement (11) ein axialer Anschlag (27) für die die geringere Wandstärke aufweisende Stirnseite des mittleren Konusrings (21) vorgesehen ist und die Radien der Konusflächen mit dem größeren Konuswinkel (14) so bemessen sind, daß in einem Punkt während des Anziehens der Spannschrauben (5) der mittlere Konusring (21) mit der Stirnseite (28) an dem Anschlag (27) und gleichzeitig mit der Konusfläche (22) an der gegenüberliegenden Konusfläche (13) anliegt.

3. Spannsatz nach Anspruch 1 oder 2, **dadurch gekennzeichnet**, daß die Ausnehmung (31,41) in mindestens einer der Konusflächen (22,23) des mittleren Konusrings (21,32) vorgesehen ist.

4. Spannsatz nach Anspruch 3, **dadurch gekennzeichnet**, daß die Ausnehmung (31,41) durch eine ringsum berandete, radial durchgehende Durchbrechung des mittleren Konusrings (21,32) gebildet ist.

5. Spannsatz nach Anspruch 4, **dadurch gekennzeichnet**, daß die Ausnehmung (41) durch eine radiale Bohrung des mittleren Konusrings (32) gebildet ist.

6. Spannsatz nach Anspruch 4, **dadurch gekennzeichnet**, daß die Ausnehmung (31) durch eine radiale Nut des mittleren Konusrings (21) gebildet ist.

7. Spannsatz nach einem der Ansprüche 1 bis 6, **dadurch gekennzeichnet**, daß mehrere Ausnehmungen (31,41) über den Umfang gleichmäßig verteilt vorgesehen sind.

## Claims

1. Clamping system (10, 40) for connecting an outer component (1), in particular a hub, having a cylindrical opening (3), to an inner component (2, 42), in particular a shaft, having a cylindrical external surface (4, 44) arranged concentrically with respect to the opening (3),
with an inner coned element (11, 30) having an outer peripheral surface in the form of a conical surface (13),
with an outer coned element (18, 33) having an inner peripheral surface formed as a conical surface (19),
with an intermediate conical ring (21,32) with inner and outer peripheral surfaces in the form of conical surfaces (22, 23) having the same cone angle (14, 20) as the outer and inner conical surfaces (13, 19) of the coned elements (11, 30; 18, 33) and co-operating in an axially sliding manner with them and forming with them respective conical pairings (13, 22; 19, 23), the apices of the conical surfaces (22, 23) of the intermediate ring (21, 32) lying axially on the same side of the ring (21, 32) and the cone angle (20) of the one conical surface pairing (19, 23) lying in the self-locking range angularly spaced away from the self-locking angle, the cone angle (14) of the other conical surface pairing (13, 22) lying above the self-locking range,
and with axial clamping screws (5) which stress the intermediate conical ring (21) axially relative to the inner and outer coned elements (11, 18),
characterised in that
at least one recess (31,41) having a peripheral edge or rim is provided in at least one of the conical surfaces of the two conical surface pairings (13, 22; 19, 23).

2. Clamping system according to Claim 2, characterised in that an axial stop (27) for that end face of the intermediate ring (21) having the smaller wall thickness is provided on the coned element (11) which has the cone angle (14) which lies above the self-locking range and the radii of the conical surfaces having the larger cone angle (14) are of such dimensions that in one point during the tightening of the clamping screws (5) the intermediate conical ring (21) engages with its end face (28) against the stop (27) and at the same time with its conical surface (22) against the opposing conical surface (13).

3. Clamping system according to Claim 1 or 2, characterised in that the recess (31, 41) is provided in at least one of the conical surfaces (22, 23) of the intermediate conical ring (21, 32).

4. Clamping system according to Claim 3, characterised in that the recess (31, 41) is formed by an opening extending right through the intermediate conical ring (21, 32) and having a peripheral edge or rim right round it.

5. Clamping system according to Claim 4, characterised in that that recess (41) is formed by a radial bore in the intermediate conical ring (32).

6. Clamping system according to Claim 4, characterised in that the recess (31) is formed by a radial groove in the intermediate conical ring (21).

7. Clamping system according to one of Claim 1 to 6, characterised in that a number of recesses (31, 41) are provided, uniformly distributed circumferentially.

## Revendications

1. Système de serrage (10, 40) pour relier un composant externe présentant un évidement cylindrique (3), en particulier un moyeu, à un composant interne présentant une surface périphérique externe (4, 44) cylindrique et concentrique à l'évidement (3), en particulier un arbre, système qui comporte :
- un élément conique interne (11, 30) dont la surface périphérique externe constitue une portée conique (13),
- un élément conique externe (18, 33) dont la surface périphérique interne constitue une portée conique (19),
- une bague conique intermédiaire (21, 32) dont les surfaces périphériques interne et externe constituent des portées coniques ayant les mêmes angles de cône (14, 20) que les portées externe et interne (13, 19) des éléments coniques (11, 30, 18, 33) sur lesquelles elles glissent axialement en formant avec les éléments des paires de portées coniques (13, 22 ; 19, 23), les sommets des portées coniques (22, 23) de la bague conique intermédiaire (21, 32) étant situés axialement du même côté de cette bague, les angles du cône (20) d'une paire de portée coniques (19, 23) se situant dans la plage d'autocoincement tandis que l'angle du cône (14) de l'autre paire de portées coniques se situe au-dessus de la plage d'autocoincement,
- des vis axiales de serrage (5) qui appliquent la bague conique intermédiaire (21) sur les éléments coniques (11, 18) en les mettant en tension axiale réciproque,
caractérisé en ce que
dans au moins une des portées coniques des deux paires des portées coniques (13, 22 ; 19, 23) il est prévu au moins un évidement (31, 41) présentant un bord tout autour de lui.

2. Système de serrage selon la revendication 1,
caractérisé en ce que
l'élément conique (11) dont l'angle de cône (14) se situe au dessus de la plage d'autocoincement comporte une butée (27) destinée à la face frontale la moins épaisse de la bague intermédiaire (21) et les rayons des portées coniques ayant le plus grand angle de cône (14) sont dimensionnées de manière qu'à un moment, pendant le serrage des vis (5), la bague conique intermédiaire (21) vienne s'appuyer en même temps par sa face frontale (28) sur la butée (27) et par sa portée conique (22) sur la portée conique (13) qui lui fait face.

3. Système de serrage selon la revendication 1 ou 2,
caractérisé en ce que
l'évidement (31, 41) est prévu dans au moins une des portées coniques (22, 23) de la bague conique intermédiaire (21, 32).

4. Système de serrage selon la revendication 3,
caractérisé en ce que
l'évidement (31, 41) est constitué par une ouverture de la bague conique intermédiaire traversant radialement la bague conique et présentant un bord périphérique.

5. Système de serrage selon la revendication 4,
caractérisé en ce que
l'évidement (41) est constitué par un perçage radial traversant la bague conique intermédiaire (32).

6. Système de serrage selon la revendication 4,
caractérisé en ce que
l'évidement (31) est constitué par une rainure radiale de la bague conique intermédiaire (21).

7. Système de serrage selon une des revendications 1 à 6,
caractérisé en ce que
plusieurs évidements (31, 41) sont répartis régulièrement sur la périphérie.
